# EUROPEAN PATENT APPLICATION

(11) **EP 1 533 933 A2**
(43) Date of publication of application: **25.05.2005**
(21) Application number: 04027076.1
(22) Date of filing: 15.11.2004
(51) Int. Cl.: H04L 1/18

(54) **Method and apparatus for transmitting/receiving a control signal on a high speed shared control channel in a hybrid automatic retransmission request system**

(30) Priority: 14.11.2003 KR 2003080755
(71) Applicant: Samsung Electronics Co., Ltd., Suwon-si, Gyeonggi-do (KR)
(72) Inventor: Kim, Noh-Sun, c/o Samsung Electronics Co., Ltd., Suwon-si Gyeonggi-do (KR); Kim, Hun-Kee, c/o Samsung Electronics Co., Ltd., Suwon-si Gyeonggi-do (KR); Ryu, Joon-Sang, c/o Samsung Electronics Co., Ltd., Suwon-si Gyeonggi-do (KR)
(74) Representative: Lang, Johannes, Dipl.-Ing.

(57) **Abstract**

A method and apparatus for transmitting/receiving control information to support High Speed Downlink Packet Access (HSDPA) in a WCDMA communication system are provided. When transmitting new packet data, a Node B sets a New data Indicator (NI) to a specific bit value indicating an initial transmission for the packet data. Upon receipt of a retransmission request for the packet data, the Node B sets the NI as the inverse of a previous NI. If an redundancy version (RV) representing a constellation and a data type for packet data, is set to a specific value indicating an initial transmission, the Node B set the NI to the inverse of the specific bit value regardless of the previous NI. A User Equipment (UE) receives control information including the NI and the redundancy version (RV) and determines that the packet data is initial transmission data or retransmission data, according to the NI and the RV.

## Description

### BACKGROUND OF THE INVENTION

### Field of the Invention

The present invention relates generally to a method and apparatus for transmitting/receiving a High Speed Shared Control Channel (HS-SCCH) to support High Speed Downlink Packet Access (HSDPA) in a Wideband Code Division Multiple Access (WCDMA) wireless communication system. In particular, the present invention relates to a transmitting/receiving method and apparatus for preventing data loss that may be encountered with conventional systems through effective utilization of a New data Indicator (NI) included in a HS-SCCH.

### Description of the Related Art

Mobile communication systems have evolved from a voice-based system to a high-speed, high-quality wireless packet data transmission system for provisioning data service and multimedia service. Standardization efforts dedicated to High Speed Downlink Packet Access (HSDPA) and Evolution-Data and Voice (1xEV-DV) primarily by the 3^{rd} Generation Partnership Project (3GPP) and 3GPP2 committees is clear evidence of efforts to find a solution to 2Mbps or higher-speed, high-quality wireless data packet transmission. 4^{th} generation mobile communication systems aim to provide higher-speed, higher-quality multimedia service.

In wireless communications, the radio channel environment is an obstacle to high-speed, high-quality data service. For example, the radio channel environment varies often due to fading-incurred signal power change, shadowing, Doppler effects caused by mobile movement and frequent mobile velocity changes, interference from other users, and multipath interference as well as Additive White Gaussian Noise (AWGN). Thus it follows that an advanced technology is needed to improve adaptability to the channel changes beyond the technologies of conventional 2^{nd} generation and 3^{rd} generation mobile communication systems in order to provide high-speed wireless data packet service. Although fast power control adopted in conventional systems improves adaptability to the channel changes, the 3GPP and 3GPP2 dedicated to standardization of a high-speed data packet transmission system commonly address Adaptive Modulation and Coding Scheme (AMCS) and Hybrid Automatic Repeat Request (HARQ).

AMCS is a method of changing a modulation scheme and a coding rate adaptively according to the change of a downlink channel environment. Generally, a User Equipment (UE) measures the Signal-to-Noise Ratio (SNR) of a downlink signal and reports it to a Node B. The Node B then estimates the downlink channel environment based on the SNR information and determines an appropriate modulation scheme and coding rate according to the estimation. Therefore, a system using AMCS applies a higher-order modulation scheme such as 16-ary Quadrature Amplitude Modulation (16QAM) or 64QAM and a high coding rate such as 3/4 to a UE near a Node B, that is, a UE in a good channel status. To a UE at a cell boundary, that is, a UE in a bad channel status, the system applies a lower-order modulation scheme such as Binary Phase Shift Keying (BPSK), Quadrature PSK (QPSK), or 8PSK (8-ary PSK) and a low coding rate such as 1/2. AMCS improves system performance on average by reducing interference relative to the conventional fast power control method.

HARQ is a scheme of, when an error is generated in an initially transmitted data packet, retransmitting the packet to compensate for the error. The HARQ scheme comprises Chase Combining (CC), Full Incremental Redundancy (FIR), and Partial Incremental Redundancy (PIR).

In the CC, the same packet as initially transmitted is retransmitted. A receiver combines the retransmitted packet and the buffered initially transmitted packet in a predetermined method, thereby increasing the reliability of coded bits input to a decoder and thus achieving a total system performance gain. The combining of the same two packets virtually gives the effect of repetition coding. Hence, an average performance gain of about 3dB is achieved.

The FIR improves decoding performance at the receiver by transmitting a packet having only parity bits generated from a channel encoder instead of the same initially transmitted packet. The decoder uses the new parity bits as well as the initial transmission information. The resulting decrease in coding rate increases decoding performance. It is well known in coding theory that a performance gain at a low coding rate is higher than that achieved from repetition coding. Thus, the FIR offers good performance over the CC in terms of performance gain.

Unlike the FIR, the PIR transmits a data packet comprised of information bits and new parity bits at a retransmission. At decoding, the initially transmitted information bits are combined with the retransmitted information bits, leading to the effect of the CC, and the use of the parity bits leads to the effect of the IR. The PIR uses a higher coding rate than the FIR. Thus, the PIR falls between the FIR and the CC in terms of performance.

While the AMC and HARQ are independent techniques to increase adaptability to the change of links, a combination of the AMC and HARQ can improve the system performance considerably. That is, a transmitter in a Node B determines a modulation scheme and a coding rate for a channel encoder adaptively according to the downlink channel status and transmits a data packet correspondingly. A receiver in a UE, if it fails to decode the data packet, requests a retransmission. The Node B retransmits a predetermined data packet in a predetermined HARQ scheme in response to the retransmission request.

To support the above-described schemes, a UE and a Node B need to exchange related control signals. Especially a control channel that delivers the control channels in a Universal Mobile Telecommunication Service (UMTS) communication system is called a HS-SCCH. The HS-SCCH delivers control signals related to a (High Speed Physical Downlink Shared Channel (HS-PDSCH) for transmitting user data at a high rate.

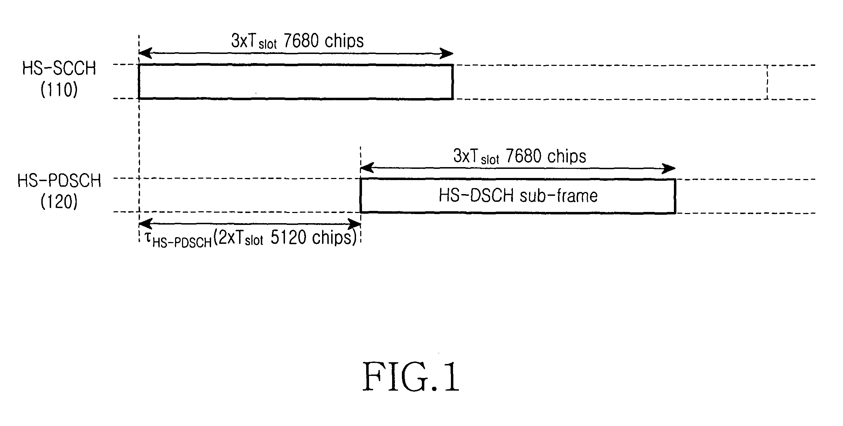

FIG. 1 illustrates the structures of the HS-SCCH and the HS-PDSCH in the UMTS communication system.

Referring to FIG 1, an HS-SCCH 110 is transmitted two slots earlier than a HS-PDSCH 120, for delivering control information necessary for demodulation of the HS-PDSCH 120. To support the demodulation of the HS-PDSCH 120, the HS-SCCH 110 delivers the following types of control information.
1. 7-bit channelization code set information
2. 1-bit modulation information
3. 6-bit TB (Transport Block) size information
4. 3-bit HARQ process information
5. 3-bit redundancy and constellation version
6. a 1-bit NI flag
7. 16-bit UE ID (Identifier)

The HS-SCCH 110 comprises three slots. The first slot delivers the channelization code set information and modulation information, while the second and third slots deliver the TB size information, HARQ process information, redundancy and constellation version, NI flag, and UE ID. The reason for dividing the HS-SCCH slots into two parts, is that the channelization code set information and the modulation information are important for demodulation of the HS-PDSCH 120.

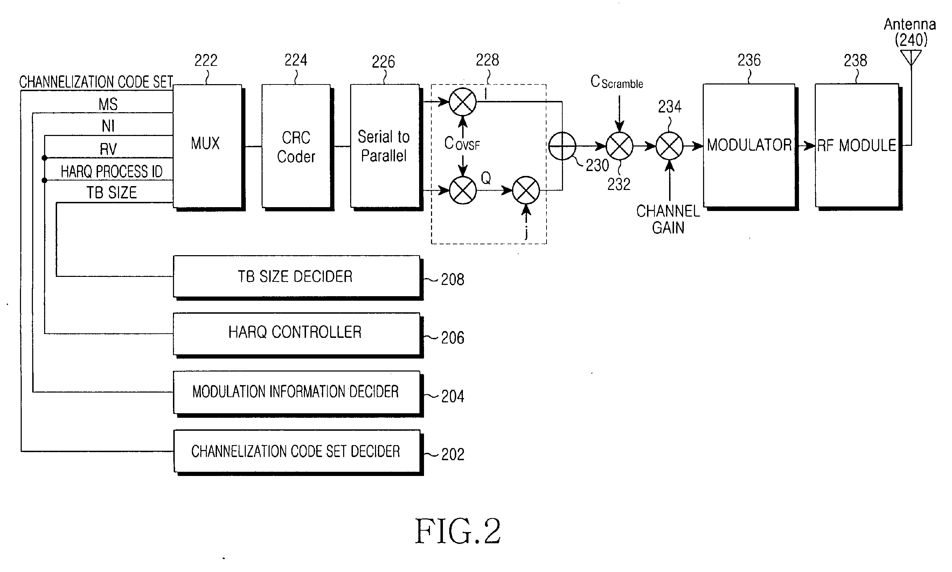

FIG 2 is a block diagram of a transmitting apparatus in a Node B for transmitting the HS-SCCH in a conventional HSDPA communication system.

Referring to FIG. 2, before transmitting user data on a High Speed Downlink Shared CHannel (HS-DSCH), the transmitting apparatus assigns channelization codes for the user data through a channelization code set decider 202, and determines a modulation scheme (MS) for the user data through a modulation information decider 204. A HARQ controller 206 determines an NI, HARQ process information, and a redundancy version (RV). A TB size decider 208 determines a TB size for transmission of the user data.

A multiplexer (MUX) 222 generates a bit stream in a slot format by multiplexing the channelization code set information, MS information (e.g. redundancy and constellation information), NI, HARQ process information, RV, and TB size information. A Cyclic Redundancy Check (CRC) coder 224 attaches a CRC to the bit stream. The CRC may be masked with a UE ID. A serial to parallel converter (SPC) 226 converts the CRC-attached control information bits to parallel information bits and outputs them separately as an in-phase (I) part and a quadrature-phase (Q) part to a spreader 228.

The spreader 228 generates an I channel signal and a Q channel signal by spreading the I part and the Q part with a predetermined spreading code C_{OVSF}. A summer 230 sums the I channel signal and the Q channel signal and outputs the sum in the form of a complex signal to a scrambler 232.

The scrambler 232 scrambles the complex signal with a predetermined scrambling code C_{Scramble}. A channel gain controller 234 multiplies the scrambled signal by a channel gain and a modulator 236 modulates the gain-controlled signal in a predetermined modulation scheme. A Radio Frequency (RF) module 238 upconverts the modulated signal to an RF signal and transmits it through an antenna 240.

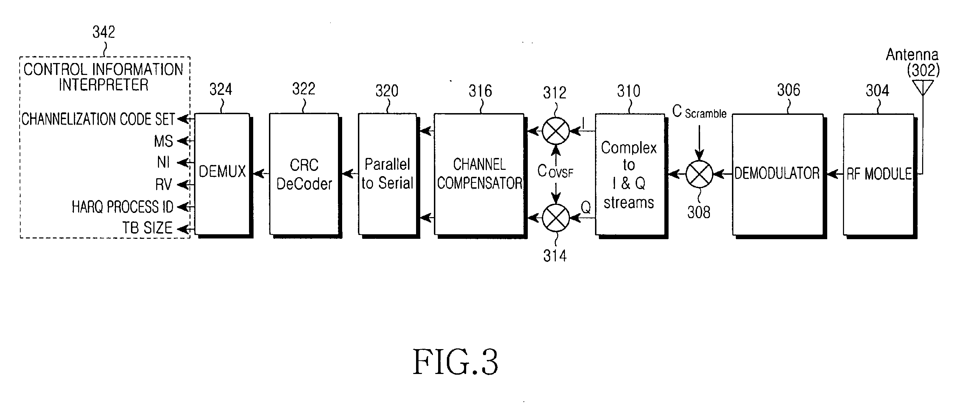

The structure of a receiving apparatus for receiving the HS-SCCH from the transmitting apparatus of FIG. 2 in the conventional HSDPA communication system will be described below with reference to FIG. 3.

Referring to FIG 3, an RF module 304 downconverts an RF signal received through an antenna 302 to a baseband signal. A demodulator 306 demodulates the baseband signal in correspondence with the modulation scheme used in the Node B. A multiplier 308 multiplies the demodulated signal by the same scrambling code C_{Scramble} used in the Node B and outputs a complex signal. Thus, the multiplier 308 acts as a descrambler.

A complex I/Q stream converter 310 separates the complex signal from the multiplier 308 into an I bit stream and a Q bit stream. Multipliers 312 and 314 multiply the I and Q bit streams by the same spreading code C_{OVSF} used in the Node B. Thus, the multipliers 312 and 314 act as despreaders. A channel compensator 316 compensates for the distortion of the despreaded signals caused during transmission over the air from the Node B.

A parallel to serial converter (PSC) 320 serializes the compensated signals. A CRC decoder 322 checks the CRC of the serial signal from the PSC 320. If no errors are detected, the CRC decoder 322 outputs the serial signal to a demultiplexer (DEMUX) 324. The DEMUX 324 demultiplexes the received signal into a channelization code set information, MS information, an NI, HARQ process information, an RV, and a TB size.

A control information interpreter 342 interprets the control information. If the control information indicates a new data packet, the previously received data is cleared and instead, the current received data is stored. If the control information indicates a retransmitted packet, the previous data is combined with the current data and stored.

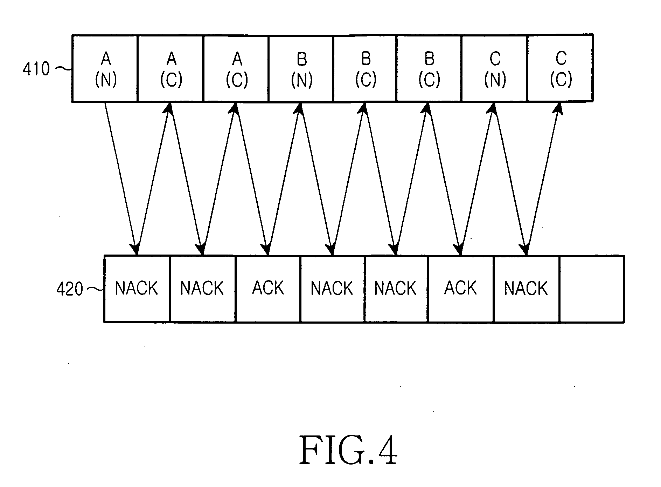

An ACK/NACK is processed in two ways: fixed and toggled. In the fixed method, the NI is set to 1 at an initial transmission and to 0 at retransmissions. FIG. 4 illustrates a typical fixed NI transmission. Reference 410 denotes packets A, B and C together with the NI transmitted from the Node B to the UE. N and C in the blanks represent New and Continued, respectively. Reference numeral 420 denotes an ACK or NACK fed back from the UE to the Node B.

As illustrated in FIG 4, the Node B transmits a new packet with the NI set to "N" when receiving an ACK from the UE. If receiving an NACK, the Node B retransmits the previous packet with the NI set to "C".

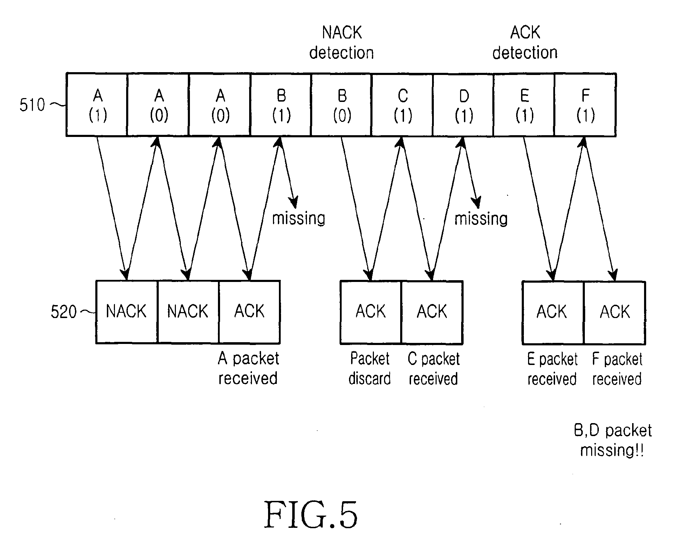

However, if initially transmitted or retransmitted packet is missing over the air, errors may be generated in the above fixed HARQ scheme, as illustrated in FIG. 5. Reference numeral 510 denotes initial transmission packets or retransmission packets with the NI from the Node B. Reference numeral 520 denotes the ACK or NACK fed back from the UE to the Node B.

Referring to FIG 5, after receiving packet A without errors through two retransmissions, the UE transmits an ACK for packet A to the Node B. In response to the ACK, the Node B transmits the next packet B to the UE. If packet B is missing at its initial transmission, the UE does not transmit either an ACK or NACK to the Node B and the Node B must determine how to act as to no response from the UE. If the Node B retransmits packet B considering the no response as an NACK, the UE checks that the NI of the retransmitted packet B is 0, that is, the NI is unavailable and discards the retransmitted packet B. Consequently, packet B is completely lost. Also, when packet D is lost during its initial transmission and the Node B transmits a new packet E, interpreting no response from the UE as an ACK, the UE virtually loses packet D too.

The other approach, the toggled method maintains the NI until a packet is completely transmitted. That is, if a particular packet is transmitted with the NI set to 1, the NI is maintained at 1 until an ACK is received for the packet. Upon receipt of the ACK, the NI is toggled to 0 for the next packet.

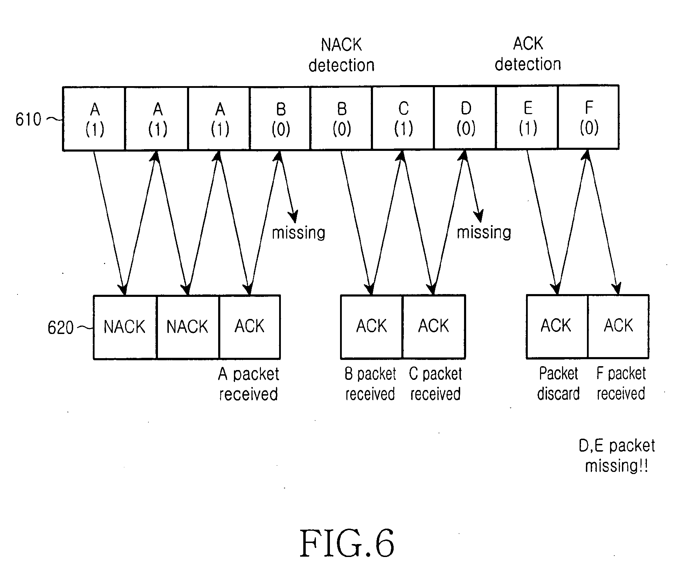

FIG. 6 illustrates a typical toggled NI transmission. Reference numeral 610 denotes initial transmission packets and retransmission packets with the NI from the Node B. Reference numeral 620 denotes the ACK and NACK fed back from the UE to the Node B. As illustrated in FIG. 6, the Node B maintains the NI at 1 while transmitting packet A and then toggles the NI to 0 when transmitting the next packet B.

When the UE receives packet C with the NI set to 1 and transmits an ACK, the Node B transmits packet D with the NI set to 0. If the packet D is lost and the Node B interprets no response from the UE as an ACK, the Node B transmits packet E with the NI set to 1. However, the UE discards the packet E, considering that the packet E is a retransmission of the already received packet C according to the NI of the packet E. In this case, the UE also experiences packet loss.

The fixed and toggled NI transmission schemes can be summarized as follows.

When an initially transmitted packet is lost, the Node B determines no response for the packet from the UE as an ACK or NACK. In the case of an NACK, data loss occurs to the fixed HARQ scheme. On the contrary, in the case of an ACK, data loss occurs to both the fixed and toggled HARQ schemes. Therefore, packet loss is inevitable to both schemes. In this context, there is a need for a transmitting/receiving method and apparatus for overcoming the data loss.

### SUMMARY OF THE INVENTION

An object of the present invention is to substantially solve at least the above problems and/or disadvantages and to provide at least the advantages below. Accordingly, an object of the present invention is to provide a transmitting/receiving method and apparatus for preventing packet loss by efficiently transmitting control information in a Hybrid Automatic Repeat Request (HARQ) communication system.

Another object of the present invention is to provide a transmitting/receiving method and apparatus for preventing packet loss on a physical channel by using fixed and toggled NI transmission schemes in combination in a HARQ communication system.

A further object of the present invention is to provide a transmitting/receiving method and apparatus for preventing packet loss to thereby improve system throughput in a HARQ communication system.

The above objects are achieved by providing a method and apparatus for transmitting/receiving control information to support High Speed Downlink Packet Access (HSDPA) in a Wideband Code Division Multiple Access (WCDMA) communication system

According to one aspect of the present invention, in a method of transmitting control information for HARQ in a wireless communication system, when packet data is initially transmitted, a new data indicator is set to a specific bit value indicating an initial transmission for the packet data. Upon receipt of a retransmission request for the packet data, the new data indicator is set to an inverse of a previous new data indicator corresponding to a retransmission of a previous packet data.

According to another aspect of the present invention, in a method of receiving control information for HARQ in a wireless communication system, control information is received, including a new data indicator and a redundancy/constellation version for packet data to be received. If the redundancy/constellation version is a specific value indicating an initial transmission and the new packet data indicator is a specific bit value indicating an initial transmission, the packet data is interpreted as initial transmission data. If the redundancy/constellation version is not the specific value and the new packet data indicator is an inverse of a previous new data indicator corresponding tb a retransmission of a previous packet data, the packet data is interpreted as retransmission data.

### BRIEF DESCRIPTION OF THE DRAWINGS

The above and other objects, features and advantages of the present invention will become more apparent from the following detailed description when taken in conjunction with the accompanying drawings in which:
FIG 1 illustrates the structures of a conventional High Speed Shared Control Channel (HS-SCCH) and a High Speed Physical Downlink Shared Channel (HS-PDSCH) in a Universal Mobile Telecommunication Service (UMTS) communication system;
FIG 2 is a block diagram of a transmitting apparatus for transmitting the HS-SCCH in a conventional High Speed Downlink Packet Access (HSDPA) communication system;
FIG. 3 is a block diagram of a receiving apparatus for receiving the HS-SCCH in the conventional HSDPA communication system;
FIG. 4 illustrates a conventional fixed New data Indicator (NI) transmission operation;
FIG. 5 illustrates a conventional fixed NI transmission operation with errors;
FIG. 6 illustrates a conventional toggled NI transmission operation;
FIG. 7 illustrates an example of Orthogonal Variable Spreading Factor (OVSF) code assignment in an HSDPA communication system according to an embodiment of the present invention ;
FIG. 8 is a block diagram of a transmitting apparatus for transmitting the HS-SCCH in the HSDPA communication system according to an embodiment of the present invention;
FIG. 9 is a flowchart illustrating a Node B operation according to an embodiment of the present invention;
FIG. 10 is a block diagram of a receiving apparatus for receiving the HS-SCCH in the HSDPA communication system according to an embodiment of the present invention;
FIG 11 is a flowchart illustrating a User Equipment (UE) operation according to an embodiment of the present invention; and
FIG 12 exemplarily illustrates control signals between the Node B and the UE according to an embodiment of the present invention.

### DETAILED DESCRIPTION OF THE PREFERRED EMBODIMENT

An embodiment of the present invention will now be described herein below with reference to the accompanying drawings. In the following description, well-known functions or constructions are not described in detail for conciseness.

The present invention is intended to minimize packet loss by optimizing transmission of control information related to a packet retransmission in a Hybrid Automatic Repeat Request (HARQ) communication system.

In a High Speed Downlink Packet Access (HSDPA) communication system supporting HARQ, packet data is transmitted on a High Speed Physical Downlink Shared Channel (HS-PDSCH) and control information about the HS-PDSCH is transmitted on a High Speed Shared Control Channel (HS-SCCH) at the same time. The control information includes channelization code set information, modulation information, a Transport Block (TB) size, HARQ process information, a redundancy and constellation version, a New data Indicator (NI), and a User Equipment Identifier (UE ID).

The control information related to packet transmission will be detailed.

### HS-DSCH Channelization Code Set

In a HSDPA system that increases communication efficiency using Adaptive Modulation and Coding Scheme (AMCS) and HARQ, some of the total downlink transmission resources are shared among a plurality of UEs. The downlink transmission resources include Orthogonal Variable Spreading Factor (OVSF) codes being orthogonal codes. The HSDPA communication system uses up to 15 OVSF codes with an SF of 16.

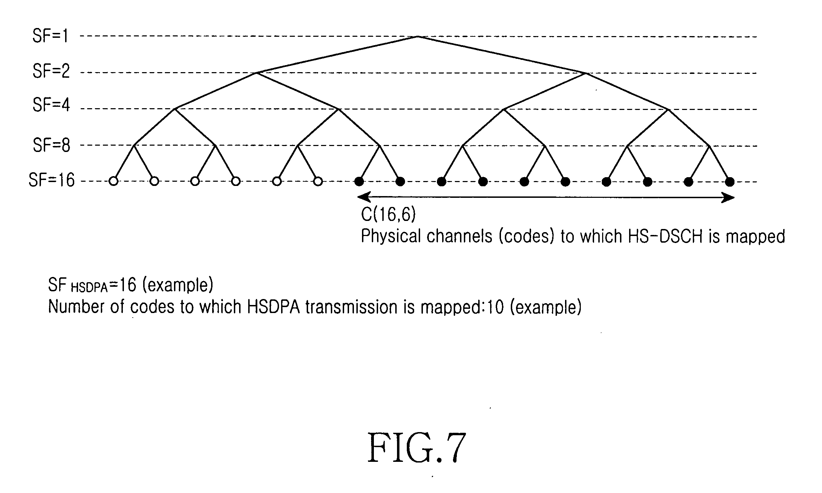

FIG. 7 illustrates an example of OVSF code assignment in an HSDPA communication system according to an embodiment of the present invention.

Referring to FIG 7, each OVSF code is represented as C(i, j) according to its location in a code tree. The variables i and j of C(i, j) denote an SF and a location counted from the leftmost position in the OVSF code tree, respectively. For example, C(16, 0) refers to an OVSF code with an SF of 16 at the first position from the leftmost position in the OVSF code tree.

In FIG. 7, for SF=16, the 7^{th} to 16^{th} OVSF codes, C(16, 6) to C(16, 15) are assigned for HSDPA service. A plurality of OVSF codes available for the HSDPA service can be code-multiplexed for a plurality of UEs at an identical time. That is, if the 10 OVSF codes, C(16, 6) to C(16, 15) are used for a predetermined UE, three OVSF codes C(16, 3) to C(16, 5) can be code-multiplexed for another UE at the same time.

### Modulation Scheme (MS) information

As described above, the AMCS scheme adaptively changes a modulation scheme for a modulator and a coding rate for a channel encoder according to the change in condition the downlink channel environment. Typically, a UE measures the Signal to Noise Ratio (SNR) of a downlink signal and feeds back the SNR information to a Node B as an indication of a downlink channel status. The Node B estimates the downlink channel status based on the received information and selects an appropriate modulation scheme and coding rate according to the estimation.

When QPSK and 16QAM are used, the Node B must inform the UE the modulation scheme and coding rate of a current packet at each packet transmission. Because the coding rate is matched with a transport block combination, a High Speed Downlink Shared CHannel (HS-DSCH) channelization code set, and a modulation scheme, the Node B only has to transmit the MS information to the UE.

### TB Size

TB size information indicates the size of a TB on a transport channel mapped to a physical channel.

### Redundancy and Constellation Version (RV)

In a type of HARQ, IR, when an initial transmission data packet has errors, new parity bits related to the packet are transmitted at a retransmission. The RV indicates the ID of the bit combination transmitted. If a high-order modulation, 16QAM is used for the HS-PDSCH, a different version of constellation is adopted at each retransmission to change signal point locations to which transmission bits are mapped. The constellation version information indicates the version of a constellation used at a retransmission. The redundancy and constellation version (RV) information is represented in three bits to indicate a bit combination and a constellation version together.

### NI

An NI indicates whether a current packet is initially transmitted or retransmitted. The NI is represented in one bit.

### UE ID

The UE ID is specific to each UE. The UE determines whether the HS-SCCH and the HS-PDSCH are addressed to it in each time slot using its UE ID.

### HARQ Process ID

HARQ is a special case of ARQ with the following two schemes introduced to increase transmission efficiency. One is to transmit a retransmission request and a response between a UE and a Node B and the other is to temporarily store data having errors and combine the data with retransmitted data at a receiver.

Meanwhile, a typical Stop And Wait (SAW) ARQ scheme allows transmission of the next packet data only when an ACK is received for the current packet data. Then even if the packet data can be transmitted, the ACK is awaited. An n-channel SAW ARQ provided to solve this problem allows transmission of successive packet data without receiving an ACK for the current packet data.

That is, n time-divided logical channels are established between the UE and the Node B. The Node B tells the UE which logical channel delivers specific packet data using a predetermined time slot or channel number. The UE reorders packet data received at a particular time point in the original order using the HARQ process information or soft-combines the packet data.

Specifically, the UE is enabled to recover the packet data as much as can be using the NI flag in an embodiment of the present invention. According to the embodiment of the present invention, the NI flag is toggled at each new packet transmission and always fixed to a specific value (e.g. 1) at the initial transmission of each packet.

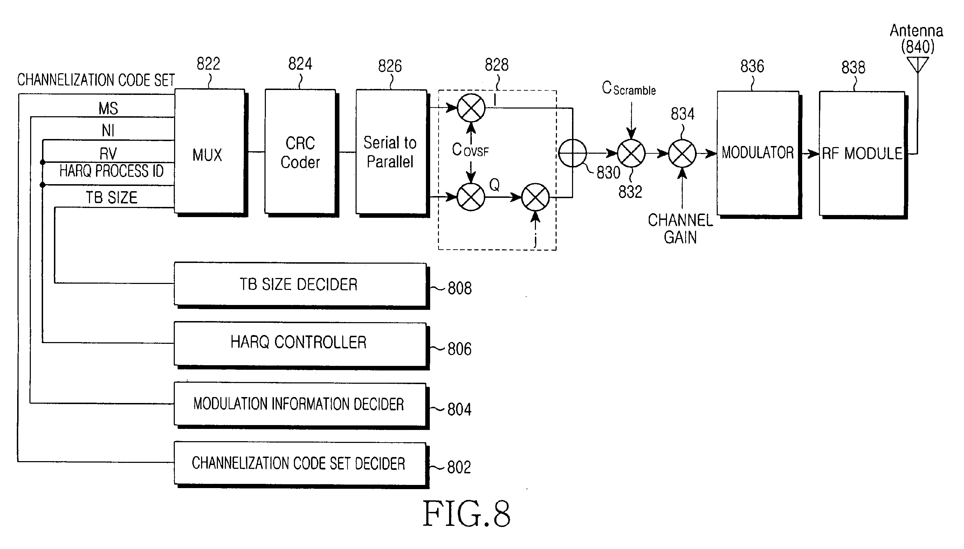

FIG 8 is a block diagram of a transmitting apparatus for transmitting the HS-SCCH in the HSDPA communication system according to an embodiment of the present invention. The components from a MUX 822 to an antenna 840 are collectively called a transmitter, and are distinguishable from control information decision blocks 802 to 808.

Referring to FIG. 8, before transmitting user data on the HS-DSCH, the Node B assigns channelization codes for the user data through a channelization code set decider 802, and determines a modulation scheme for the user data through a modulation information decider 804. A HARQ controller 806 determines a NI, HARQ process information, and a RV. A TB size decider 808 determines a TB size for transmission of the user data.

The HARQ controller 806 reads an ACK or NACK received from the UE. In the case of an ACK, the HARQ controller 806 determines the RV as 000 and the NI as 1, and stores the inverse of prev_NI as the prev_NI. The prev_NI indicates a previous NI corresponding to a retransmission of a previous packet data and may be set to '0' initially. The reason for setting the RV to 000 is that it is regulated to use the first redundancy/constellation version at an initial packet transmission. In the case of an NACK, an RV is selected and the NI is set to the prev_NI. If the RV is 000, the NI is set to 0.

The MUX 822 generates a bit stream in a slot format by multiplexing the channelization code set information, MS information, NI, HARQ process information, RV, and TB size information. A CRC coder 824 attaches a CRC to the bit stream. The CRC may be masked with a UE ID. An SPC 826 converts the CRC-attached control information bits to parallel information bits and outputs them separately as an in-phase (I) part and a quadrature-phase (Q) part to a spreader 828.

The spreader 828 spreads the I part and the Q part with a predetermined spreading code C_{OVSF} and provides an I channel signal and a Q channel signal separately to a summer 830. The summer 830 sums the I channel signal and the Q channel signal and outputs the sum in the form of a complex signal to a scrambler 832. The scrambler 832 scrambles the complex signal with a predetermined scrambling code C_{Scramble}.

A channel gain controller 834 multiplies the scrambled signal by a channel gain, and a modulator 836 modulates the gain-controlled signal using a predetermined modulation scheme. A Radio Frequency (RF) module 838 upconverts the modulated signal to a RF signal and transmits it through the antenna 840.

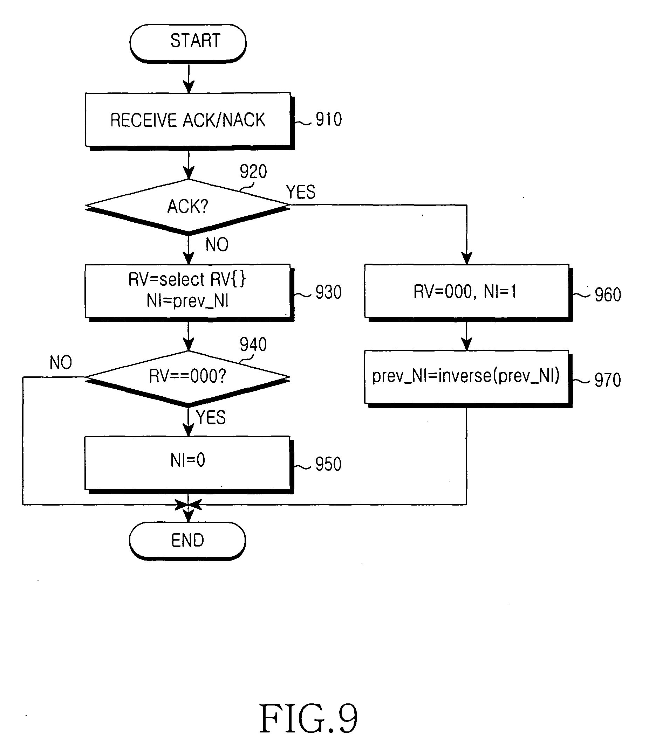

FIG. 9 is a flowchart illustrating a Node B operation according to the preferred embodiment of the present invention. In the operation, after transmitting packet data on the HS-PDSCH and control information on the HS-SCCH, the Node B receives an ACK/NACK from the UE on an HS-DPCCH (High Speed Dedicated Physical Control Channel) and determines control information to be transmitted on the HS-SCCH in the next time period, especially an NI through the HARQ controller 806.

Referring to FIG. 9, the HARQ controller 806 receives a response signal for a transmitted packet from the UE in step 910 and determines whether the response signal is an ACK in step 920. If it is not an ACK, the HARQ controller 806 selects an appropriate RV for a current packet from a set of available RVs and sets the NI to prev_NI in step 930. If the selected RV is "000" in step 940, the HARQ controller 806 sets the NI to 0 in step 950. If the selected RV is not "000" in step 940, the method ends.

On the contrary, if the response signal is an ACK, the HARQ controller 806 sets the RV to "000" and the NI to "1" to transmit a new packet in step 960 and stores the inverse of the stored prev_NI as prev_NI in step 970.

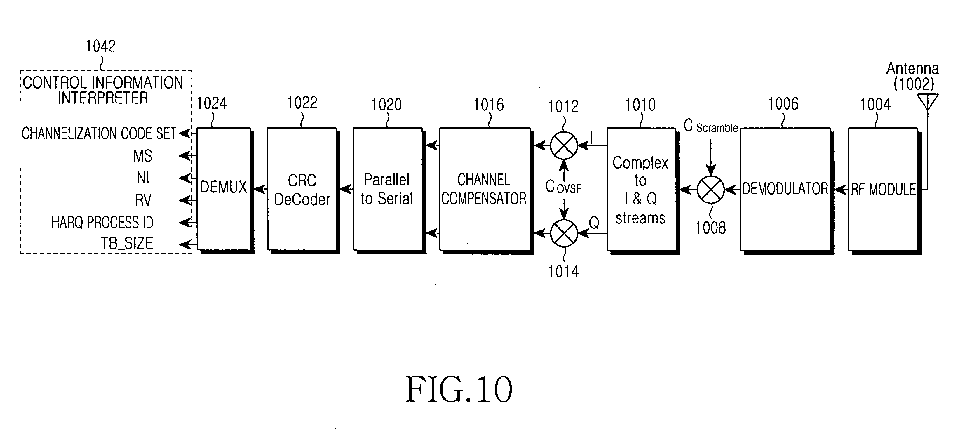

The structure of a receiving apparatus for receiving the HS-SCCH from the transmitting apparatus of FIG 8 in the HSDPA communication system will be described below with reference to FIG 10. An antenna 1002 to a DEMUX 1024 will be collectively called a receiver and is distinguishable from a control information interpreter 1042.

Referring to FIG 10, an RF module 1004 downconverts an RF signal received through the antenna 1002 to a baseband signal. A demodulator 1006 demodulates the baseband signal using the modulation scheme used in the Node B. A multiplier 1008 multiplies the demodulated signal by the same scrambling code C_{Scramble} used in the Node B and outputs a complex signal. Thus, the multiplier 1008 acts as a descrambler.

A complex I/Q stream converter 1010 separates the complex signal from the multiplier 1008 into an I bit stream and a Q bit stream. Multipliers 1012 and 1014 multiply the I and Q bit streams by the same spreading code C_{OVSF} used in the Node B. Thus, the multipliers 1012 and 1014 act as despreaders. A channel compensator 1016 compensates for the distortion of the despreaded signals caused during transmission over the air from the Node B.

A PSC 1020 serializes the compensated signals. A CRC decoder 1022 checks the CRC of the serial signal from the PSC 1020. If no errors are detected, the CRC decoder 1022 outputs the signal to the DEMUX 1024. The DEMUX 1024 demultiplexes the received signal into channelization code set information, MS information, an NI, HARQ process information, an RV, and a TB size.

The control information interpreter 1042 interprets the control information. Especially the control information interpreter 1042 determines whether a current received packet is initially transmitted or retransmitted by the RV and NI included in the control information. Thus, it can be determined whether the current packet is initially transmitted or retransmitted based on the RV and NI.

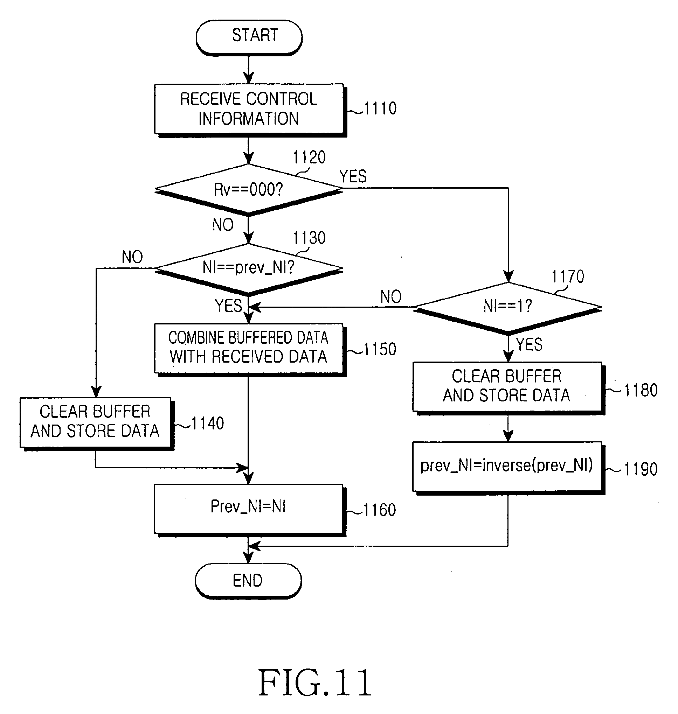

With reference to FIG 11, a method of interpreting control information and controlling reception of the HS-PDSCH at the UE will be described.

Referring to FIG. 11, after receiving control information on the HS-SCCH in step 1110, the UE determines whether a RV included in the control information is 000 in step 1120. If the RV is not 000, the UE determines whether an NI included in the control information is identical to a pre-stored prev_NI in step 1130. If the RV is not 000 and the NI is different from the prev_NI, this implies that an initially transmitted packet is lost and a retransmitted packet is received. Therefore, if the NI is different from the prev_NI, the UE determines that a new data packet has been received on the HS-PDSCH using the control information of the HS-SCCH, clears existing data in an HS-PDSCH buffer, and instead, stores the current packet data in the buffer in step 1140. In step 1160, prev_NI is set to the current NI.

On the other hand, if the NI is identical to the prev_NI in step 1130, the UE determines that the data received on the HS-PDSCH is a retransmission packet, combines the received data with the buffered data, and stores the combined data in the buffer in step 1150. In step 1160, the UE sets prev_NI to the current NI.

On the other hand, if the RV is 000, the UE determines whether the NI is 1 in step 1170. If the RV is 000 and the NI is 1, the UE clears the data from the HS-PDSCH buffer and stores the current received packet data in the buffer, assuming that the current packet data is a new packet in step 1180. In step 1190, the UE inverts the stored prev_NI and stores the inverse as prev_NI.

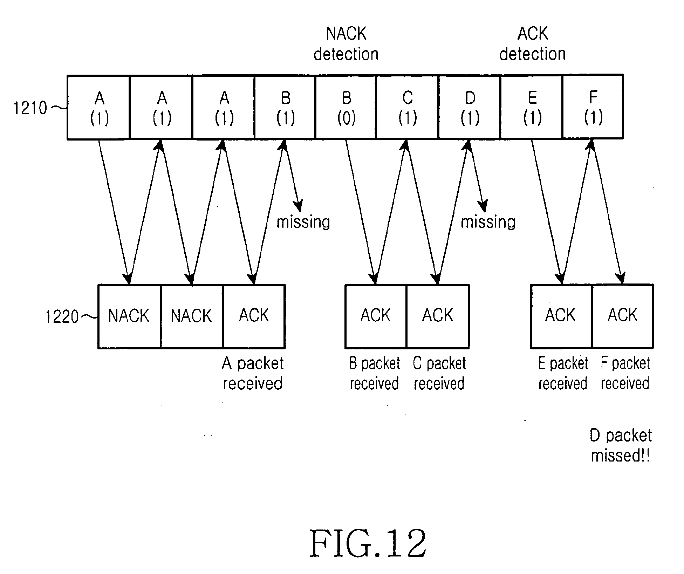

FIG. 12 illustrates an example of a control signal flow between the Node B and the UE according to an embodiment of the present invention. Reference numeral 1210 denotes packets transmitted from the Node B to the UE on the HS-PDSCH and NI values delivered on the HS-SCCH. Reference numeral 1220 denotes ACKs or NACKs for the packets, transmitted on the HS-DPCCH.

Referring to FIG. 12, after an initial transmission of packet A, the Node B sets the NI to 1 at two retransmissions of the packet A. When the UE transmits an ACK for the second retransmission of packet A, the Node B transmits the next packet B. If the packet B is lost during its initial transmission, the UE does not transmit a response signal (ACK/NACK) and the Node B interprets no response from the UE as an ACK or NACK.

If the Node B considers no response as a NACK and thus retransmits the packet B, the NI of the packet B is set to 0 at the retransmission, toggled from the NI of the retransmissions of the packet A. Thus, the UE recognizes the transmission of a new packet according to the NI of the retransmission packet B.

Then, the Node B receives an ACK for packet C from the UE and transmits packet D. If the packet D is lost during the initial transmission, the UE does not transmit a response signal (ACK/NACK). If the Node B considers no response as an ACK, it transmits packet E with an RV set to 000 and an NI set to 1. Therefore, the UE recognizes the transmission of a new packet.

As described above, the combination of the fixed and toggled NI transmission methods in the present invention minimizes packet loss.

In accordance with an embodiment of the present invention, packet loss is prevented by efficient transmission of the NI and thus retransmission through a higher layer is prevented in a physical layer, for high-speed packet data transmission/reception in a Wideband Code Division Multiple Access (WCDMA) wireless communication system. As a result, system throughput is improved.

While the invention has been shown and described with reference to a certain preferred embodiment thereof, it should be understood by those skilled in the art that various changes in form and details may be made therein without departing from the spirit and scope of the invention as defined by the appended claims.

## Claims

1. A method of transmitting control information for Hybrid Automatic Retransmission reQuest (HARQ) in a wireless communication system, comprising the steps of:
setting, when packet data is initially transmitted, a new data indicator (NI) to a specific bit value indicating an initial transmission for the packet data in order that the new data indicator is transmitted to correspond to the packet data; and
setting the new data indicator to a inverse of a previous new data indicator corresponding to a retransmission of a previous packet data, in order that the reset new data indicator is transmitted to correspond to a retransmission packet data of the packet data, upon receipt of a retransmission request for the packet data.

2. The method of claim 1, wherein the first setting step comprise the steps of:
setting a redundancy/constellation version (RV) to a specific value indicating the initial transmission, the RV representing a constellation and a data type corresponding to the initial packet data; and
transmitting the RV and the new data indicator corresponding the initial packet data.

3. The method of claim 2, wherein the second setting step comprises the steps of:
setting the redundancy/constellation version according to a constellation and a data type corresponding to the retransmission packet data;
setting the new data indicator to a inverse of the specific bit value in despite of the previous new data indicator, if the RV corresponding to the retransmission packet data is identical to the specific value; and
transmitting the reset RV and the reset new data indicator corresponding to the retransmission packet data.

4. The method of claim 1, wherein the new data indicator is transmitted on a different channel from a channel on which the packet data or the retransmission packet data is transmitted.

5. An apparatus for transmitting control information for Hybrid Automatic Retransmission reQuest (HARQ) in a wireless communication system, comprising:
a controller for setting, when packet data is initially transmitted, a new data indicator (NI) to a specific bit value indicating an initial transmission for the packet data, and upon receipt of a retransmission request for the packet data, and setting the new data indicator to a inverse of a previous new data indicator corresponding to a retransmission of a previous packet data; and
a transmitter for transmitting the new data indicator corresponding to the packet data or a retransmission packet data of the packet data, on a different channel from a channel on which the packet data or the retransmission packet data is transmitted.

6. The apparatus of claim 5, wherein the controller sets a redundancy/constellation version (RV) to a specific value indicating the initial transmission, the RV representing a constellation and a data type corresponding to the initial packet data, wherein the RV is transmitted to correspond to the initial packet data by the transmitter.

7. The apparatus of claim 6, wherein the controller sets the RV according to a constellation and a data type corresponding to the retransmission packet data and sets the new data indicator to a inverse of the specific bit value regardless of the previous new data indicator, if the RV corresponding to the retransmission packet data is identical to the specific value, wherein the reset RV is transmitted to correspond the retransmission packet data by the transmitter.

8. A method of receiving control information for Hybrid Automatic Retransmission reQuest (HARQ) in a wireless communication system, comprising the steps of:
receiving control information including a new data indicator (NI) and a redundancy/constellation version (RV) for packet data to be received, the redundancy/constellation version indicating a constellation and a data type corresponding to the packet data;
determining, if the redundancy/constellation version is a specific value indicating an initial transmission and the new packet data indicator is a specific bit value indicating an initial transmission, that the packet data is initial transmission data; and
determining, if the redundancy/constellation version is not the specific value and the new packet data indicator is an inverse of a previous new data indicator corresponding to a retransmission of a previous new data indicator, that the packet data is retransmission data.

9. The method of claim 8, wherein the first determining step comprises the step of:
determining that the packet data is the initial transmission data, if the redundancy/constellation version is not identical to the specific value and the new packet data indicator is not identical to the inverse of the previous new data indicator.

10. The method of claim 8, wherein the second determining step comprises the step of:
determining that the packet data is the retransmission data, if the redundancy/constellation version is identical to the specific value and the new packet data indicator is not identical to the specific bit value.

11. The method of claim 8, wherein the first determining step comprises the step of:
deleting previously received data and storing the initial transmission data.

12. The method of claim 8, wherein the second determining step comprises the step of:
combining the previously received data with the retransmission data and storing the combined data.

13. An apparatus for receiving control information for Hybrid Automatic Retransmission reQuest (HARQ) in a wireless communication system, comprising:
a control information receiver for receiving control information a new data indicator (NI) and a redundancy/constellation version (RV) for packet data to be received, the redundancy/constellation version indicating a constellation and a data type corresponding to the packet data; and
a controller for determining, if both the redundancy/constellation version is a specific value indicating an initial transmission and the new packet data indicator is a specific bit value indicating an initial transmission, that the packet data is initial transmission data, and determining, if the redundancy/constellation version is not the specific value and the new packet data indicator is an inverse of a previous new data indicator corresponding to a retransmission of a previous packet data, that the packet data is retransmission data.

14. The apparatus of claim 13, wherein if the redundancy/constellation version is not identical to the specific value and the new packet data indicator is not identical to the inverse of the previous new data indicator, the controller determines that the packet data is the initial transmission data.

15. The apparatus of claim 13, wherein if the redundancy/constellation version is identical to the specific value and the new packet data indicator is not identical to the specific bit value, the controller determines that the packet data is the retransmission data.

16. The apparatus of claim 13, further comprising a data receiver for deleting previously received data and storing the initial transmission data, or combining the previously received data with the retransmission data and storing the combined data.

17. A method of transmitting and receiving packet data in a wireless communication system, comprising the steps of:
determining whether received packet data is initial transmission packet data or retransmission packet data according to a new data indicator received from a Node B, combining the received retransmission packet data with packet data stored in a buffer if the receive packet data is the retransmission packet data, and replacing the stored packet data with the initial transmission packet data if the receive packet data is the initial transmission packet data in a user equipment (UE);
determining whether the receive packet data has errors, transmitting an acknowledgment for the packet data if no errors are detected, and transmitting a non-acknowledgement for the packet data if errors are detected in the UE;
setting the new data indicator to a specific bit value indicating an initial transmission for next packet data, upon receipt of the acknowledgement from the UE in the Node B; and
setting the new data indicator to an inverse of a previous new data indicator corresponding to a retransmission of a previous packet data upon receipt of the non-acknowledgement from the UE in the Node B.

18. The method of claim 17, further comprising the steps of:
selecting a redundancy/constellation version for retransmission packet data, when packet data is retransmitted in the Node B;
setting the new data indicator to the inverse of the previous new data indicator in the Node B, if the selected redundancy/constellation version is not identical to a specific value for the initial transmission; and
setting the new data indicator to the specific bit value for the initial transmission regardless of the previous new data indicator, if the selected redundancy/constellation version is identical to the specific value for the initial transmission.

19. The method of claim 17, further comprising the steps of:
replacing the data stored in the buffer with the received packet data, upon receipt of a redundancy/constellation version set to the specific value indicating an initial transmission and a new packet data indicator set to the specific bit value indicating an initial transmission;
replacing the data stored in the buffer with the received packet data, upon receipt of a redundancy/constellation version not set to the specific value and a new packet data indicator not set to the inverse of the previous new data indicator;
combining the received packet data with the stored data, upon receipt of a redundancy/constellation version not set to the specific value and a new packet data indicator set to the inverse of the previous new data indicator; and
combining the received packet data with the stored data, upon receipt of a redundancy/constellation version set to the specific value and a new packet data indicator not set to the specific bit value.
